Europäisches Patentamt

European Patent Office

Office européen des brevets

(19)

(11) Numéro de publication : **0 069 625**
**B1**

(12)                    FASCICULE DE BREVET EUROPÉEN

(45) Date de publication du fascicule du brevet :
**18.09.85**

(51) Int. Cl.⁴ : **F 16 K 31/06, F 16 K 27/02,**
**F 16 K 11/04**

(21) Numéro de dépôt : **82401145.6**

(22) Date de dépôt : **22.06.82**

(54) **Electro-vanne.**

(30) Priorité : **24.06.81 FR 8112373**

(43) Date de publication de la demande :
**12.01.83 Bulletin 83/02**

(45) Mention de la délivrance du brevet :
**18.09.85 Bulletin 85/38**

(84) Etats contractants désignés :
**BE DE GB IT NL**

(56) Documents cités :
**DE-A- 2 903 296**
**GB-A-   898 926**
**US-A- 3 635 247**

(73) Titulaire : **JOUCOMATIC S.A.**
**32, Avenue Albert-1er**
**F-92506 Rueil-Malmaison (FR)**

(72) Inventeur : **Berte, François**
**19, Avenue du Pasteur Martin Luther King**
**F-78230 Le Pecq (FR)**

(74) Mandataire : **Armengaud, Alain**
**Cabinet ARMENGAUD AINE 3 Avenue Bugeaud**
**F-75116 Paris (FR)**

Jouve, 18, rue St-Denis, 75001 Paris, France

## Description

La présente invention est relative à une électro-vanne.

Les électro-vannes actuellement disponibles sur le marché sont généralement réalisées à partir d'un certain nombre de pièces métalliques dont l'usinage est difficile (voir p. e. US-A-3 635 247). Ces électro-vannes sont relativement coûteuses, en raison, d'une part, de leur mode de fabrication, qui nécessite des travaux de finition, et, d'autre part, du nombre relativement important des pièces qui les composent.

La présente invention se propose de pallier ces inconvénients en apportant une électro-vanne bon marché, facile à réaliser et permettant d'obtenir toutes les fonctions qui sont généralement exigées pour les diverses applications envisagées.

L'électro-vanne selon la présente invention est du type comportant un seul noyau et un corps de vanne extérieur unique pour toute la gamme, et elle est caractérisée en ce qu'elle comporte :

a) deux pièces encliquetables : l'une solidaire du noyau, et l'autre portant le clapet unique de l'électro-vanne ;

b) deux pièces identiques superposables, recevant les deux pièces encliquetables, ces deux pièces superposables portant les sièges dudit clapet assurant les voies en captant les orifices du corps de vanne ; et

c) un corps de vanne d'usinage simple, destiné à recevoir l'ensemble constitué par l'empilage des deux pièces encliquetables et des deux pièces superposables, et dans lequel sont ménagés les orifices de raccordement de la vanne.

Selon une caractéristique de cette invention, les divers composants de l'électro-vanne sont réalisés en matières moulables (par exemple, plastique, zamak, etc.).

Selon l'invention, les parties en contact des deux pièces superposables recevant les pièces encliquetables sont pourvues de portées coniques afin de réaliser un auto-serrage et un auto-centrage de ces deux pièces dans le corps, et d'assurer la précision de la course du clapet entre les deux sièges.

D'autres caractéristiques et avantages de cette invention ressortiront de la description faite ci-après en référence aux dessins annexés, qui en illustrent un exemple de réalisation dépourvu de tout caractère limitatif. Sur les dessins :

la figure 1 représente l'électro-vanne selon l'invention en une coupe verticale selon 1-1 de la figure 4 ;

la figure 2 est une coupe selon 2-2 de la figure 4 ;

la figure 3 est une vue en élévation latérale de l'électro-vanne selon les figures 1 et 2, en arrachement et coupe verticale partiels ; et

la figure 4 est une coupe horizontale selon 4-4 de la figure 3.

En se référant aux dessins, on voit que l'électro-vanne selon cette invention comprend trois groupes de composants principaux :

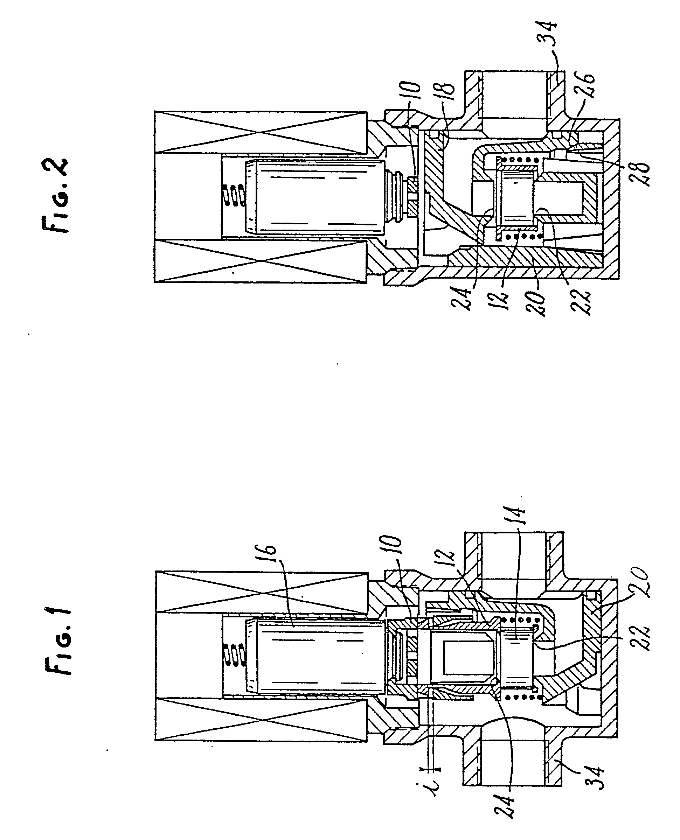

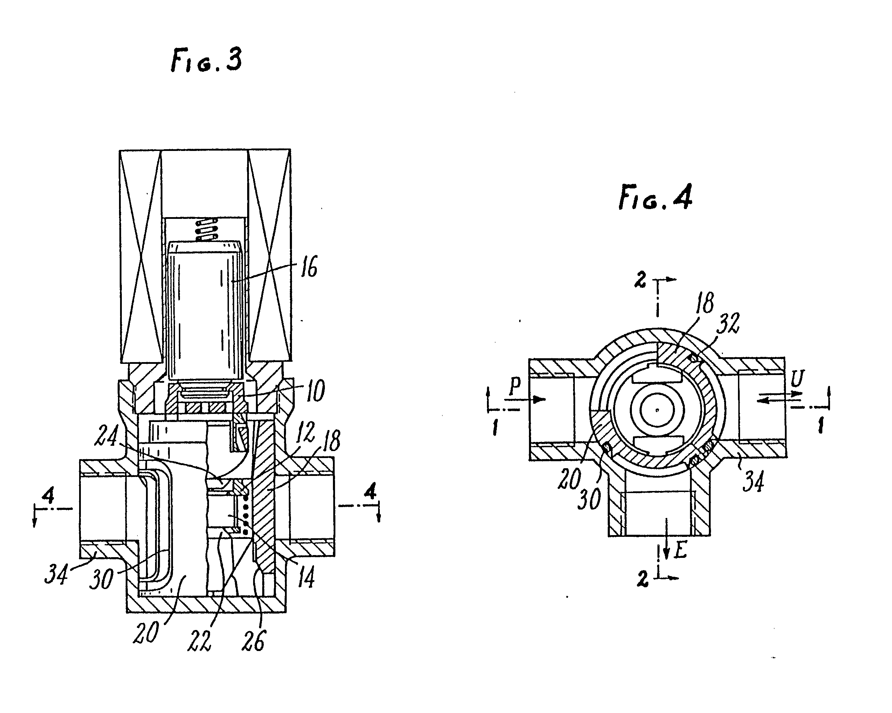

a) deux pièces 10, 12, conçues de façon à pouvoir s'encliqueter l'une sur l'autre, comme on peut le voir clairement sur la figure 1 : la pièce 10 portant le noyau 16 de l'électro-aimant de commande de la vanne, et la pièce 12 supportant le clapet 14. De préférence, ces deux pièces sont réalisées en une matière moulable, résistant à des températures relativement élevées ;

b) deux pièces identiques superposables 18, 20, réalisées également de préférence en matières moulables et recevant les deux pièces encliquetables 10 et 12. La pièce 18 porte le siège supérieur 24, et la pièce 20 le siège inférieur 22 du clapet 14, lequel se déplace entre lesdits sièges en vue d'assurer alternativement leur obturation. Les deux pièces superposables 18 et 20 réalisent les trois voies de la vanne. Chacune de ces pièces 18, 20 comporte des portées coniques inférieure et supérieure telles que, notamment, 26, 28, permettant, lors du montage de ces pièces dans le corps de vanne, d'assurer un auto-serrage des éléments en contact ainsi qu'un auto-centrage, et d'obtenir la précision voulue de la course du clapet 14 ;

c) un corps 34, dans lequel sont ménagés, comme connu, les trois orifices de raccordement de l'électro-vanne.

Le montage s'effectue de la façon suivante :

Après avoir introduit l'une des pièces 10 ou 12 dans la pièce 18, on assure l'assemblage, par encliquetage, des pièces 10 et 12 ; puis, on empile dans le corps 34 l'ensemble constitué par les quatre pièces 10, 12 et 18, 20. L'étanchéité entre ces pièces et le corps de vanne 34 est assurée par des joints 30, 32, prévus dans des gorges ménagées dans les surfaces extérieures des pièces 18, 20 au contact de l'alésage interne du corps 34, l'auto-serrage des pièces 18, 20 étant obtenu, comme on l'a indiqué ci-dessus, grâce à la présence des portées 26, 28.

L'invention permet de réaliser une gamme importante de diamètres de passages internes différents en changeant le minimum de pièces. En effet, en conservant toujours les mêmes pièces encliquetables 10 et 12, ainsi que le même corps de vanne 34, il suffit simplement de changer les pièces superposables 18, 20, dans lesquelles sont réalisées les trois voies, pour modifier les diamètres de ces voies.

L'électro-vanne selon l'invention peut assurer toutes les fonctions classiques : deux ou trois voies normalement fermées ; trois voies universelles, et deux ou trois voies normalement fermées : trois voies universelles, et deux ou trois voies normalement ouvertes. Parmi ces applications possibles, on peut mentionner notamment la robinetterie, ainsi que le pilotage de distributeurs. Pour cette dernière application, il suffit de modifier les pièces emboîtables 18 et 20 de manière que l'une de ces pièces constitue le plan de pose et une partie du corps, cependant que l'autre pièce constitue l'autre partie du corps. Sur la face avant, on collecte les purges par un orifice taraudé, et, sur la face arrière, on peut collecter les purges par l'échappement du distributeur.

Les avantages apportés par l'électro-vanne selon l'invention sont notamment les suivants :

prix de revient remarquablement bas, notamment en raison du faible nombre de composants, de leur facilité de réalisation par moulage à l'aide de matières plastiques, et de la facilité du montage ;

grande souplesse d'utilisation, en raison de la possibilité d'obtenir des vannes présentant des diamètres de passage des voies différentes, par simple assemblage, en changeant seulement les pièces 18 et 20 portant les voies de l'électro-vanne ;

absorption de l'effet de choc entre deux pièces rigides en matériaux identiques : cet effet de choc est en effet absorbé grâce à la présence du jeu « i » (figure 1) existant entre les deux pièces encliquetables 10 et 12.

Il demeure bien entendu que cette invention n'est pas limitée à l'exemple de réalisation décrit et représenté, mais qu'elle en englobe toutes les variantes.

## Revendications

1. Electro-vanne du type comportant un noyau unique (16) et un seul corps de vanne extérieur (34) pour toute la gamme, caractérisé en ce qu'elle comporte :

deux pièces encliquetables (10, 12) ; l'une (10) solidaire du noyau (16), et l'autre (12) portant le clapet unique (14) ;

deux pièces identiques superposables (18, 20) recevant les deux pièces encliquetables, ces deux pièces superposables portant les sièges (22, 24) dudit clapet assurant les voies en captant les orifices du corps de vanne ; et,

un corps de vanne (34) d'usinage simple, recevant l'ensemble constitué par l'empilage des deux pièces encliquetables (10, 12) et des deux pièces superposables (18, 20), les orifices de raccordement étant ménagés dans ce corps de vanne.

2. Electro-vanne selon la revendication 1, caractérisée en ce que ses différents composants sont réalisés en matières moulables résistant aux températures relativement élevées.

3. Electro-vanne selon l'une des revendications précédentes, caractérisée en ce que les parties en contact des deux pièces superposables (18, 20) sont pourvues de portées coniques (26, 28) en vue de réaliser un auto-serrage de ces deux pièces dans le corps ainsi qu'un auto-centrage, et d'assurer également la précision de la course du clapet (14) entre ses deux sièges.

4. Electro-vanne selon l'une quelconque des revendications précédentes, caractérisée en ce que lesdites pièces superposables (18, 20) sont conformées de manière à constituer respectivement une partie du corps de vanne.

5. Electro-vanne selon l'une quelconque des revendications précédentes, caractérisée en ce qu'on obtient des diamètres différents en changeant uniquement les pièces superposables (18, 20) réalisant les trois voies, les autres composants n'étant pas changés.

6. Electro-vanne selon l'une quelconque des revendications précédentes, caractérisée en ce qu'on prévoit un jeu « i » entre les deux pièces encliquetables (10, 12), permettant l'absorption de l'effet de choc entre deux pièces rigides.

## Claims

1. Electrovalve of the type comprising a single core (16) and a single outer valve body (34) for the whole range, characterized in that it comprises :

two interlockable parts (10, 12) : one (10) being rigidly connected to the core (16), and the other (12) carrying the single flap (14) ;

two identical superimposable parts (18, 20), receiving the two interlockable parts, said two superimposable parts carrying the seats (22, 24) of said flap providing the channels by capturing the ports of the valve body ; and,

a valve body (34) easy to machine, receiving the assembly formed by the stacking of the two interlockable parts (10, 12) and of the two superimposable parts (18, 20), the connecting ports being formed in said valve body.

2. An electrovalve according to claim 1, wherein its different components are made of moldable materials resisting to relatively high temperatures.

3. An electrovalve according to one of the preceding claims, wherein the portions in contact of the two superimposable parts (18, 20) are formed with conical support surfaces (26, 28) in order to provide a self-clamping of said two parts in the body as well as a self-centering, and to provide also the accuracy of the stroke of flap (14) between its two seats.

4. An electrovalve according to any one the preceding claims, wherein said superimposable parts (18, 20) have a configuration such as to respectively form a portion of the valve body.

5. An electrovalve according to any one of the preceding claims, characterized in that different diameters are obtained by changing only the superimposable parts (18, 20) forming the three channels, the other components not being changed.

6. An electrovalve according to any one of the preceding claims, wherein there is provided a clearance « i » between the two interlockable parts (10, 12), allowing absorbing the impact effect between two rigid parts.

## Patentansprüche

1. Magnetventil mit einem einzigen Kern und einem einzigen äusseren Ventil Körper für den gesamten Bereich, dadurch gekennzeichnet, dass es folgende Teile aufweist :

zwei einrastbare Teile (10, 12), wovon das eine (10) fest mit einem Kern (16) verbunden ist und das andere (12) die einzige Klappe (14) trägt ;

zwei übereinandersetzbare identisch ausgebildete Teile (18, 20) zur Aufnahme der beiden einrastbaren Teile, wobei diese beiden übereinandersetzbaren Teile die Sitzflächen (22, 24) für die Klappe tragen, so dass die Strömungswege durch Anschluss an Öffnungen im Ventilkörper sichergestellt sind ; und,

einen Ventilkörper (34) einfacher Bauart, welcher die gesamte Konstruktion aufnimmt, die durch übereinandersetzen der beiden einrastbaren Teile (10, 12) und der beiden übereinandersetzbaren Teile (18, 20) gebildet ist, wobei in diesem Ventilkörper die Anschlussöffnungen ausgebildet sind.

2. Magnetventil nach Anspruch 1, dadurch gekennzeichnet, dass dei verschiedenen Bauelemente aus formbaren Materialien hergestellt sind, welche relativ hohen Temperaturen widerstehen.

3. Magnetventil nach einem der vorhergehenden Ansprüche, dadurch gekennzeichnet, dass die mit den beiden übereinandersetzbaren Teilen (18, 20) in Berührung stehenden Teile mit konischen Bereichen (26, 28) zur Erzielung einer selbsttätigen Feststellung dieser beiden Teile im Ventilkörper versehen sind, sowie zur Erzielung einer selbsttätigen Zentrierung und auch zur Sicherstellung der Genauigkeit des Weges der Klappe (14) zwischen deren beiden Sitzflächen.

4. Magnetventil nach einem der vorhergehenden Ansprüche, dadurch gekennzeichnet, dass die übereinandersetzbaren Teile (18, 20) so ausgebildet sind, dass sie jeweils einen Abschnitt des Ventilkörpers bilden.

5. Magnetventil nach einem der vorhergehenden Ansprüche, dadurch gekennzeichnet, dass allein durch Veränderung der übereinandersetzbaren Teile (18, 20), welche die drei Strömungswege bilden, unterschiedliche Durchmesser erzielbar sind, während die anderen Bauteile unverändert bleiben.

6. Magnetventil nach einem der vorhergehenden Ansprüche, dadurch gekennzeichnet, dass zwischen den beiden einrastbaren Teilen (10, 12) ein « I »-förmiger Spielraum vorgesehen ist, welcher die Aufnahme der Stosswirkungen zwischen zwei starren Teilen gestattet.

0 069 625

Fig. 1

Fig. 2

Fig. 4

Fig. 3